# EUROPEAN PATENT APPLICATION

(11) **EP 1 865 297 A2**
(43) Date of publication of application: **12.12.2007**
(21) Application number: 07109038.5
(22) Date of filing: 28.05.2007
(51) Int. Cl.: G01F 23/04

(54) **An oil level indicating system for an internal combustion engine**

(30) Priority: 07.06.2006 US 422676
(71) Applicant: Ford Global Technologies, LLC, Dearborn, MI 48126 (US)
(72) Inventor: Self, Daryl, Trenton, MI 48183 (US); Mink, Jamie, Brownstown, MI 48183 (US); Reinhart, Paul, Livonia, MI 48152 (US); Frayne, Dave, Plymouth, MI 48170 (US)
(74) Representative: Messulam, Alec Moses

(57) **Abstract**

An oil level indicating system for an internal combustion engine includes an indicator passageway extending through a cylinder block (42), a cylinder head (14) and through a ported boss (30) extending through an upper engine cover (26). The ported boss (30) is sealingly engaged with the cylinder head (14) of the engine so as to prevent fugitive oil from entering the indicator passageway, thereby preventing erroneous oil level readings.

## Description

### Field of the invention

The present invention relates to an oil level indicating system for an internal combustion engine.

### Background of the invention

In their simplest form, oil level indicating systems for internal combustion engines have generally included a linear indicator embodied as a wire or thin, flexible blade which is allowed to pass into lubricating oil stored within the engine's crankcase sump, so as to provide a direct reading of the oil level. Such indicators have commonly used externally mounted tubes which sometimes extend through a side wall of a cylinder block. Unfortunately, such tubes may become damaged during operation of the vehicle, or during storage and installation of an engine. Further, such tubes take space which is almost always at a premium in modern automotive vehicle engine compartments.

Although some engines have indicators mounted in a bored or cored aperture formed at a lower portion of a cylinder block such as an oil pan rail this is not a satisfactory solution either because it is difficult to reinsert the indicator once it has been removed. Moreover, contamination is a problem because of the buildup of road grime on the lower part of the block, which may be dislodged by the vehicle operator when the indicator is being reinserted, with the result that the contamination will be pushed into the crankcase by the incoming oil indicator.

### Object of the invention

It is an object of the invention to provide an oil level indicating system that overcomes the problems inherent with prior art systems.

### Summary of the invention

According to a first aspect of the invention there is provided an oil level indicating system for an internal combustion engine characterised in that the oil level system comprises an indicator passageway having a cylinder block passage extending generally vertically through a cylinder block from an oil pan rail to a cylinder head mating surface, a cylinder head passage in registry with the cylinder block passage extending generally vertically through a cylinder head from a cylinder block mating surface to a space enclosed by an upper cover, a boss formed integrally with the upper cover extending through the upper cover, the boss having a lower end sealingly engaged with an upper portion of the cylinder head passage and a port allowing passage of an indicator, the oil level indicator extending through the indicator passageway from an upper portion of the boss to a location below the oil pan rail.

The boss may extend through and upwardly from the upper cover.

The indicator passageway may further comprise a channel formed in an oil pan attached to the oil pan rail of the cylinder block.

At least a portion of the cylinder block passage may be formed as an outer surface of the cylinder block.

The portion of the cylinder block passage formed as an outer surface of the cylinder block may be formed as a tube formed by the outer surface of the cylinder block.

The cylinder block passage may extend through an integral vent stack cast into an outside surface of the cylinder block.

A crankcase vent passage may extend through the cylinder head adjacent to the portion of the indicator passageway formed in the cylinder head.

The boss may be sealed to the cylinder head so as to prevent fugitive oil from entering the indicator passageway from the space enclosed by the upper cover.

The upper cover may be a camshaft cover.

According to a second aspect of the invention there is provided an internal combustion engine characterised in that the engine has an oil level indicating system constructed in accordance with said first aspect of the invention.

It is an advantage of the present oil level indicating system for an internal combustion engine that because the oil level indicator mount includes a boss extending upwardly from the camshaft cover, with the boss formed integrally with the cover, the oil level indicator will be mounted robustly to the engine and may be mounted so as to avoid external engine oil leaks.

It is a further advantage of the present invention that the boss to which the oil level indicator is mounted is sealed to the cylinder head so as to prevent fugitive oil from entering the indicator passageway from the space enclosed by the camshaft cover.

It is yet a further advantage of an oil level indicating system according to the present invention that it is not possible for the system to fail and to result in any portion of the indicator passageway's constituent parts migrating to the engine's oil pan.

### Brief description of the drawings

The invention will now be described further, by way of example, with reference to the accompanying drawings, in which :-
Figure 1 is a perspective view of an upper portion of an engine having an oil level indicating system according to the present invention;

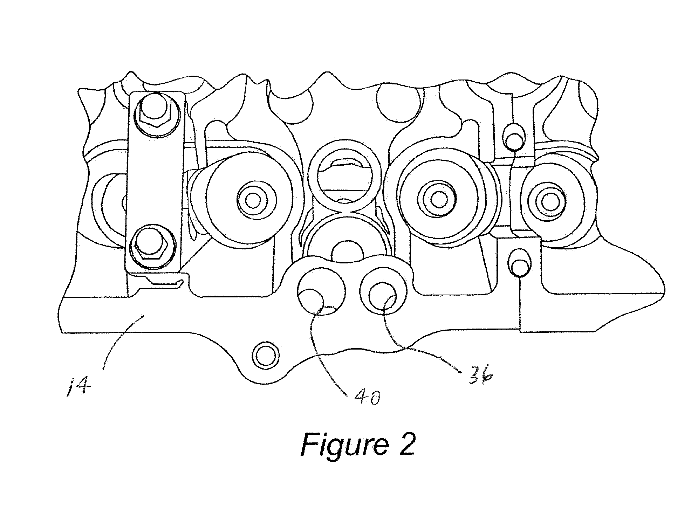

Figure 2 is a portion of a cylinder head showing passages incorporated in the present oil level indicating system;
Figure 3 is a perspective view of part of a cylinder block according to the present invention;
Figure 4 is a sectional view of an engine having an oil level indicating system according to the present invention; and
Figures 5 and 6 both illustrate a prior art oil level indicating system.

### Detailed description of the preferred embodiment(s)

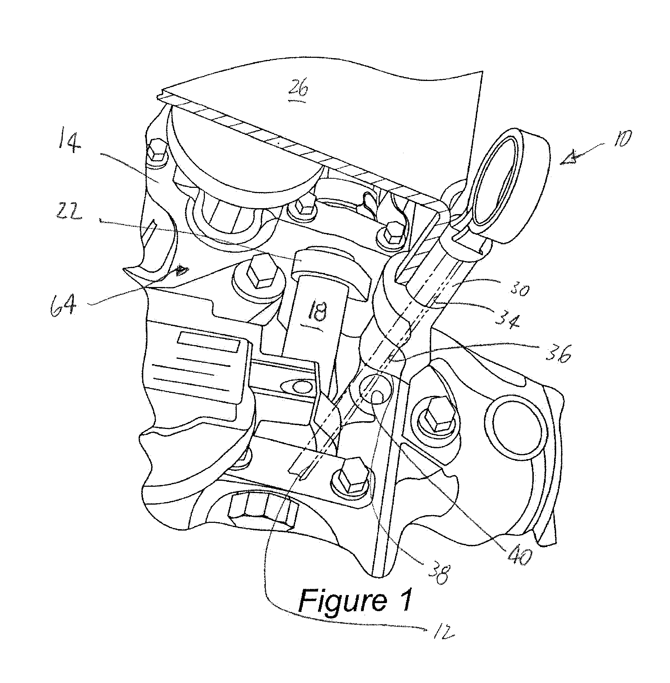

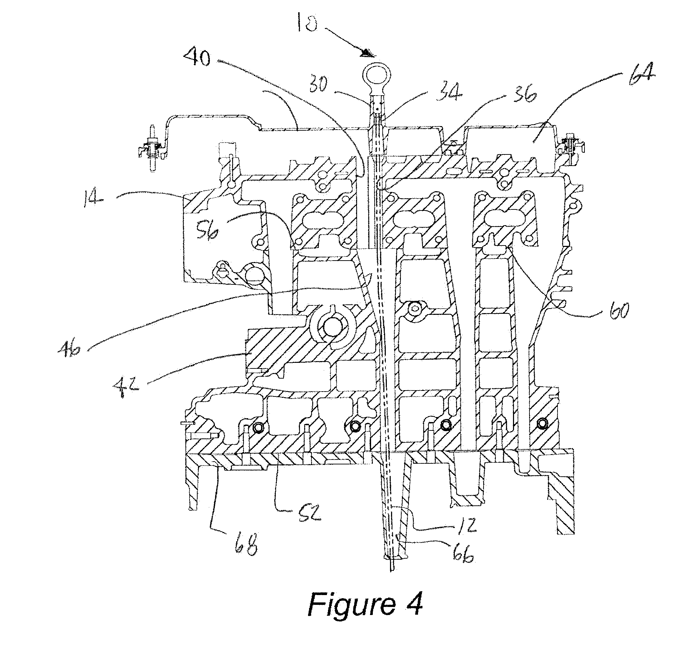

As shown in Figure 1, oil level indicator 10 is mounted within boss 30 which is integral with camshaft cover 26. The boss 30 has a bore 34 through which an indicator blade 12 extends. The boss 30 is sealingly engaged with a cylinder head 14. The sealing engagement extends about the periphery of an uppermost portion of a cylinder head passage 36 through which the blade 12 passes. The cover 26 encloses a camshaft space 64 ( shown in Figures 1 and 4) in which is housed a camshaft 18 having a number of lobes 22. Because the camshaft 18 rotates at half crankshaft speed a great deal of oil is thrown about in the camshaft space 64. However, because camshaft cover boss 30 is sealed to cylinder head 14 about the cylinder head passage 36, fugitive oil is prevented from entering the indicator passageway from the camshaft space 64.

As further shown in Figure 4, a cylinder block passage 46 extends generally vertically through cylinder block 42 and provides a passage for not only oil indicator blade 12, but also a crankcase vent passage, which is completed by a crankcase vent passage 40 extending through cylinder head 14. It should be noted that the crankcase vent passage 40, as completed by cylinder block passage 46, does not function as an oil drainback for the camshaft space 64. For this reason, it is possible to get an accurate reading from indicator blade 12, because fugitive oil is prevented from entering the indicator passageway.

As shown in Figure 4, a portion of the indicator passageway is formed by the cylinder block passage 46 and this portion extends upwardly from an oil pan rail 52 of the cylinder block 42 to a cylinder head mating surface 56.

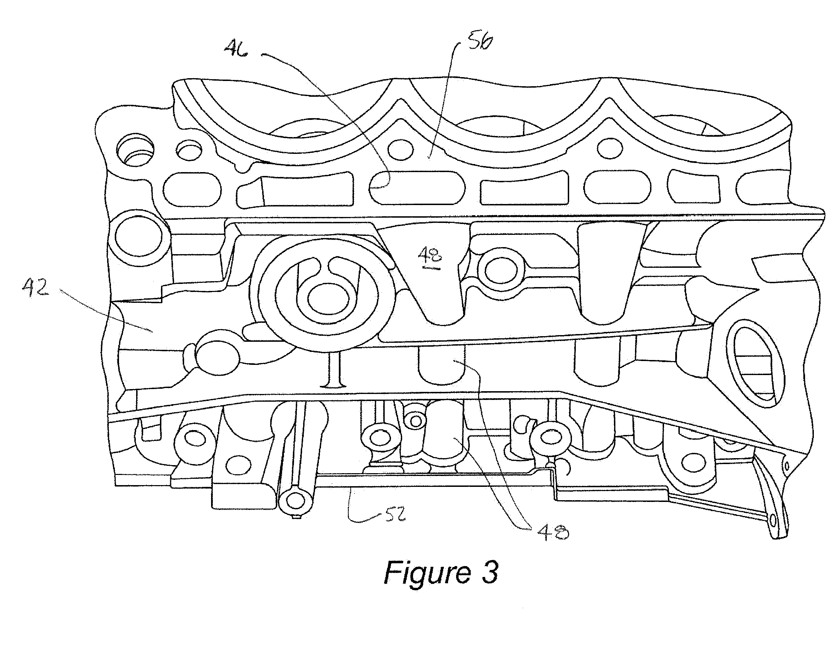

This portion of the indicator passageway is defined within an integral vent stack 48 (Figure 3) which is cast onto an outside surface of cylinder block 42.

Returning now to cylinder head 14, it is seen from Figure 4 that cylinder head passage 36 extends generally through the cylinder head 14 from a lower portion of boss 30 to a cylinder block mating surface 60. At the lowest part of the engine, a channel 66 is formed in oil pan 68 for the purpose of allowing clearance for indicating blade 12.

It is important to note that integral stack 48, which functions as a tube, is cast in place with the bulk of cylinder block 42, thereby obviating problems with prior art designs having externally mounted add-on tubes subject to leaks, dislodgement, and damage.

Therefore in summary the present invention provides an oil level indicating system for an internal combustion engine in which a linear indicator extends through a passage running from the top of the engine and into the engine's oil pan, without any external, add-on tubing being required.

By providing presentation of the indicator at the topmost part of an engine, with a passageway system that prevents inaccurate oil readings while also avoiding issues with potential impairment of the engine's operation the problems associated with the prior art are overcome.

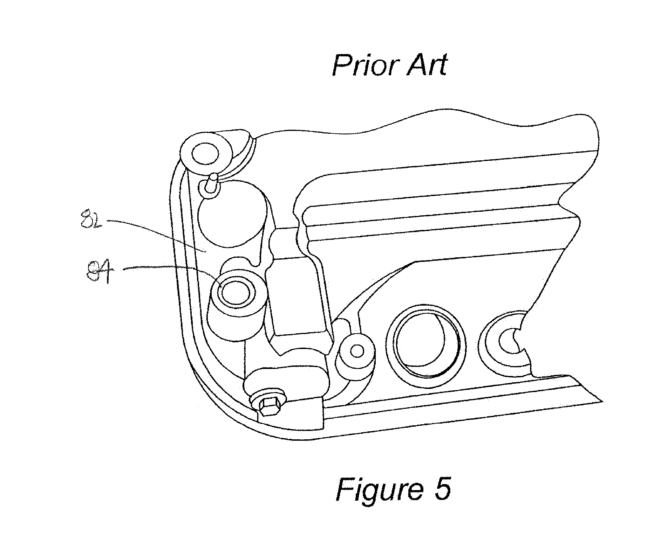

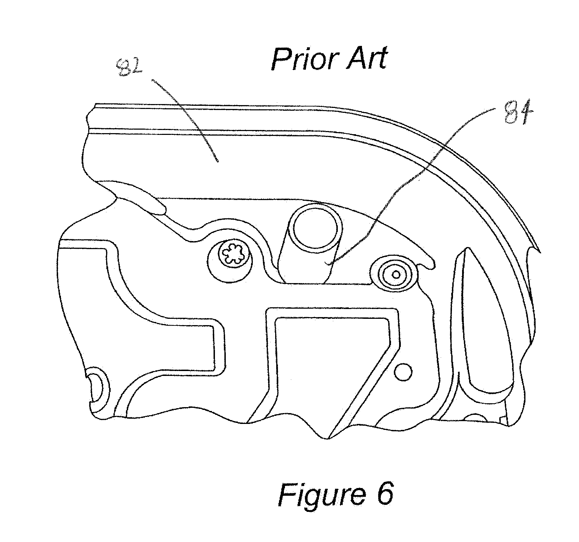

Figures 5 and 6 show a prior art attempt to mount an oil indicator through a camshaft cover of an engine. The embodiment of Figures 5 and 6 suffers from two problems. Firstly, a tube 84 which is pressed into a cover 82 may cause an external oil leak if the joint between the tube 84 and the boss into which it is pressed is not accurately and robustly made up. Furthermore, if the tube 84 becomes loose during use of the engine, it could dislodge and fall into the engine, possibly causing an engine failure. Furthermore, because the tube 84 is open ended and neither sealed nor baffled and it extends into the space of the cylinder head's valve springs and camshaft, oil is free to splash on the indicator when it is installed. This may give a false reading in the event that an uninitiated motorist fails to adequately clean the indicator before attempting to ascertain the level of oil within the engine.

## Claims

1. An oil level indicating system for an internal combustion engine **characterised in that** the oil level system comprises an indicator passageway having a cylinder block passage (46) extending generally vertically through a cylinder block (42) from an oil pan rail (52) to a cylinder head mating surface (56), a cylinder head passage (36) in registry with the cylinder block passage (46) extending generally vertically through a cylinder head (14) from a cylinder block mating surface (60) to a space enclosed by an upper cover (26), a boss (30) formed integrally with the upper cover (26) extending through the upper cover (26), the boss (30) having a lower end sealingly engaged with an upper portion of the cylinder head passage (36) and a port (34) allowing passage of an oil level indicator (10), the oil level indicator extending through the indicator passageway from an upper portion of the boss (30) to a location below the oil pan rail (52).

2. An oil level indicating system as claimed in claim 1 wherein the boss (30) extends through and upwardly from the upper cover (26).

3. An oil level indicating system as claimed in claim 1 or in claim 2 wherein the indicator passageway further comprises a channel (66) formed in an oil pan (68) attached to the oil pan rail (52) of the cylinder block (42).

4. An oil level indicating system as claimed in any of claims 1 to 3 wherein at least a portion of the cylinder block passage (46) is formed as an outer surface of the cylinder block (42).

5. An oil level indicating system as claimed in claim 4 wherein the portion of the cylinder block passage (46) formed as an outer surface of the cylinder block (42) is formed as a tube formed by the outer surface of the cylinder block (42).

6. An oil level indicating system as claimed in any of claims 1 to 5 wherein the cylinder block passage (46) extends through an integral vent stack (48) cast into an outside surface of the cylinder block (42).

7. An oil level indicating system as claimed in any of claims 1 to 6, wherein a crankcase vent passage (40) extends through the cylinder head (14) adjacent to the portion (36) of the indicator passageway formed in the cylinder head (14).

8. An oil level indicating system as claimed in any of claims 1 to 7 wherein the boss (30) is sealed to the cylinder head (14) so as to prevent fugitive oil from entering the indicator passageway from the space enclosed by the upper cover (26).

9. An oil level indicating system as claimed in any of claims 1 to 8 wherein the upper cover is a camshaft cover (26).

10. An internal combustion engine **characterised in that** the engine has an oil level indicating system as claimed in any of claims 1 to 9.
